# EUROPEAN PATENT APPLICATION

(11) **EP 4 852 143 A1**
(43) Date of publication of application: **09.12.2026**
(21) Application number: 25869660.8
(22) Date of filing: 19.12.2025
(51) Int. Cl.: H01M 10/613, H01M 50/24

(54) **CASE ASSEMBLY, BATTERY MODULE, AND BATTERY SYSTEM**

(30) Priority: 18.04.2025 CN 202520753896 U
(71) Applicant: Eve Energy Co., Ltd., Huizhou, Guangdong 516000 (CN)
(72) Inventor: HUANG, Weicai, Huizhou, Guangdong 516000 (CN)
(74) Representative: Zacco GmbH
(86) International application number: PCT/CN2025/144058
(87) International publication number: WO 2026/218657

(57) **Abstract**

Provided are a housing assembly, a battery module and a battery system. The housing assembly includes: a cooling structure; an enclosing structure provided on the cooling structure, the enclosing structure and at least part of the cooling structure surrounding to form an accommodating space, the accommodating space being configured for accommodating a cell; a mounting structure disposed in the accommodating space, the mounting structure having a mounting hole so that the cell is connected to the cooling structure through the mounting hole; and an elastic structure provided on the wall of the mounting hole, so that the outer surface of the cell is kept in contact with the wall of the mounting hole through the elastic structure.

## Description

### Cross-Reference to Related Application

This present invention claims priority to Chinese Patent Application No. 202520753896.4, filed with the Chinese Patent Office on 18 April 2025, the entire contents of which are incorporated herein by reference.

### Technical Field

The present invention relates to the field of battery manufacturing technologies, and in particular, to a housing assembly, a battery module, and a battery system.

### Background

Currently, battery modules are widely configured due to high energy density and long service life. With the continuous improvement of the energy density of a cell, the heat generated during the operation of the battery modules is increased accordingly, and excessively high temperatures increase the safety risk of the battery modules.

In the related art, a worker generally mounts a liquid cooling plate on a box body, and then bonds a battery module to the liquid cooling plate by using a thermally conductive structural adhesive, so as to cool the battery module by using a cooling medium circulated in the liquid cooling plate.

However, in an actual running process of the battery module, because the battery module and the liquid cooling plate are independent of each other, under the influence of an external force vibration, a risk that the battery module is separated from the liquid cooling plate easily occurs, thereby reducing heat dissipation efficiency of the battery module, and further affecting running safety of the battery module.

### Technical Problem

The battery module and the liquid-cooling plate are independent from each other, and are easily separated from the liquid-cooling plate. The related art results in low operation safety of the battery module.

### Technical Solution

Embodiments of the present invention provide a housing assembly, a battery module, and a battery system.

In an embodiment of the present invention, a housing assembly is provided, including: a cooling structure; an enclosing structure provided on the cooling structure, the enclosing structure and at least part of the cooling structure surrounding to form an accommodating space, the accommodating space being configured for accommodating a cell; a mounting structure disposed in the accommodating space, the mounting structure having a mounting hole so that the cell is connected to the cooling structure through the mounting hole; and an elastic structure provided on the wall of the mounting hole, so that the outer surface of the cell is kept in contact with the wall of the mounting hole through the elastic structure.

In another embodiment of the present invention, a battery module is provided. The battery module includes a housing assembly.

In yet another embodiment of the present invention, a battery system is provided. The battery system includes a battery module.

### Advantageous Effects

Provided are a housing assembly and a cooling structure arrangement method. On the one hand, the cooling structure arrangement method is able to be combined with an enclosing structure, thereby realizing the storage reliability of the housing assembly, ensuring the structural strength of the housing assembly, reducing the production cost, and realizing the economy of a battery module; on the other hand, the battery module is able to directly contact the cell, thereby reducing the temperature of the cell, and ensuring the reliability of heat dissipation and the reliability of operation of the cell; therefore, while implementing structural strength of the battery module itself, the reliability of heat dissipation is also achieved, and the operation safety of the battery module is prevented from being low. In addition, the arrangement of the elastic structure enables the cell to be stably mounted on the mounting structure, thereby preventing the cell from shaking and rotating due to the vibration of an external force, and ensuring the stability and operational reliability of the cell.

### Brief Description of the Drawings

Fig. 1 is a schematic structural exploded view of an embodiment of a housing assembly according to an embodiment of the present invention;
Fig. 2 shows a schematic view of a cooling structure and an enclosing structure of the housing assembly in Fig. 1;
Fig. 3 shows a top view of Fig. 2;
Fig. 4 shows a schematic view of the mounting structure of the housing assembly in Fig. 1;
Fig. 5 shows a top view of Fig. 4;
Fig. 6 is a schematic structural view of another view of the mounting structure of the housing assembly in Fig. 1;
Fig. 7 is a partial enlarged view of Fig. 6;
Fig. 8 is a structural schematic diagram of a limiting structure of the housing assembly in Fig. 1.

The figures include the following reference signs:
1, cell;
10, cooling structure;
20, enclosing structure; 21, accommodating space;
30, mounting structure; 31, mounting hole;
40, elastic structure; 41, main body part; 42, guiding part;
50, connecting adhesive;
60, limiting structure; 61, chamfer;
70, sealing adhesive.

### Detailed Description of the Embodiments

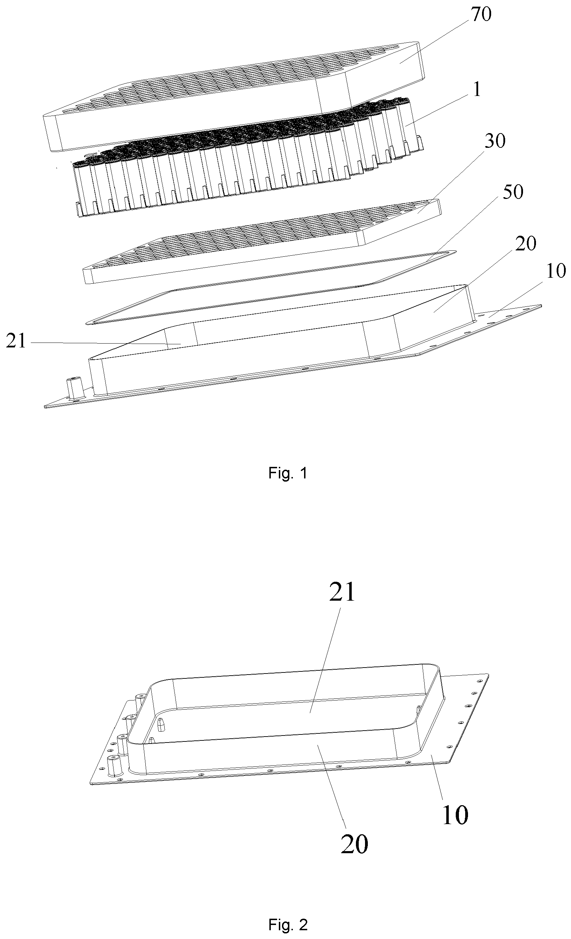

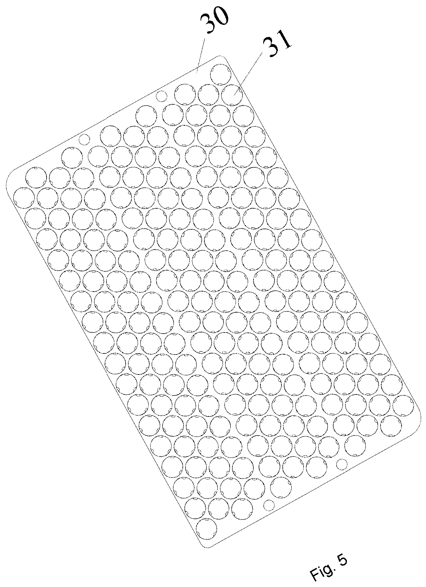

As shown in Figs. 1 to 8, the housing assembly includes a cooling structure 10, an enclosing structure 20, a mounting structure 30 and an elastic structure 40. The enclosing structure 20 is arranged on the cooling structure 10, the enclosing structure 20 and at least a part of the cooling structure 10 form an accommodating space 21, and the accommodating space 21 is configured for accommodating the cell 1. The mounting structure 30 is disposed in the accommodating space 21, and the mounting structure 30 has a mounting hole 31, so that the cell 1 is connected to the cooling structure 10 through the mounting hole 31. The elastic structure 40 is disposed on the wall of the mounting hole 31, so that the outer surface of the cell 1 is kept in contact with the wall of the mounting hole through the elastic structure 40.

By applying the technical solution of this embodiment, the enclosing structure 20 of the housing assembly is arranged on the cooling structure 10, the enclosing structure 20 and at least a part of the cooling structure 10 form an accommodating space 21, and the accommodating space 21 is configured for accommodating the cell 1. The mounting structure 30 is disposed in the accommodating space 21, and the mounting structure 30 has a mounting hole 31, so that the cell 1 is connected to the cooling structure 10 through the mounting hole 31. The elastic structure 40 is disposed on the wall of the mounting hole 31, so that the outer surface of the cell 1 is kept in contact with the wall of the mounting hole through the elastic structure 40. In this way, on the one hand, the arrangement manner of the cooling structure 10 is able to be combined with the enclosing structure 20, so that the containment reliability of the housing assembly is achieved, the structural strength of the housing assembly is ensured, the production cost is also reduced, and the economy of the battery module is achieved; on the other hand, the battery module is able to be in direct contact with the cell 1, thereby reducing the temperature of the cell 1, and ensuring the heat dissipation reliability and operational reliability of the cell 1, so that the battery module implements the heat dissipation reliability while implementing the structural strength of the battery module itself, and the operation safety of the battery module is prevented from being low. Meanwhile, the arrangement manner of the elastic structure 40 enables the cell 1 to be stably mounted on the mounting structure 30, thereby preventing the cell 1 from shaking and rotating due to external force vibration, and ensuring the mounting stability and operational reliability of the cell 1.

In an embodiment, the cooling structure 10 is a liquid cooling plate.

In an embodiment, the mounting structure 30 is formed by injection molding.

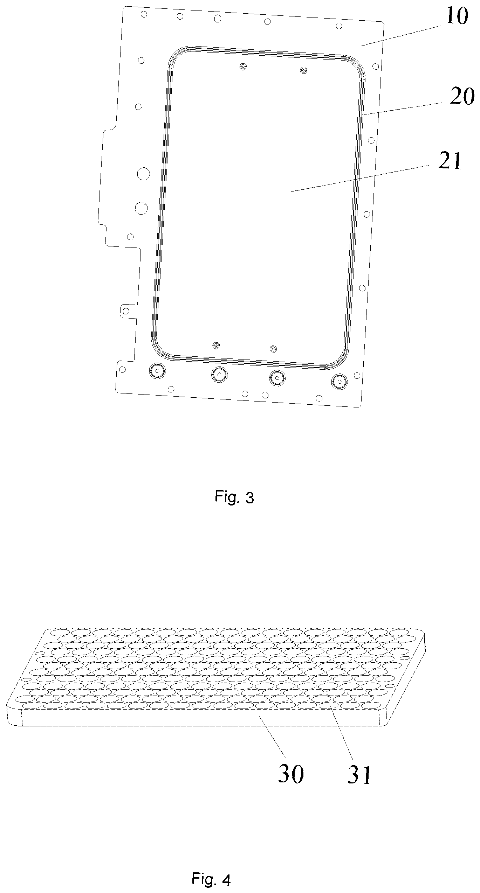

As shown in Fig. 4 to Fig. 6, the mounting structure 30 is in a rectangular plate shape, a plurality of mounting holes 31 are provided, the plurality of mounting holes 31 are divided into a plurality of groups, each of the plurality of groups of the plurality of mounting holes 31 includes multiple mounting holes 31, the plurality of groups of the plurality of mounting holes 31 are distributed at intervals along a length direction of the mounting structure 30, and the multiple mounting holes 31 in each of the plurality of groups of the plurality of mounting holes 31 are distributed at intervals along a width direction of the mounting structure 30. In this way, the arrangement of the plurality of mounting holes 31 enables the mounting structure 30 to effectively support and fix the plurality of cells 1, ensure the close layout between the plurality of cells 1 and between the plurality of cells 1 and the cooling structure 10, and achieve the integration of the plurality of cells 1 in a limited space, thereby ensuring the high energy density of the battery module. At the same time, the arrangement of the mounting structure 30 makes the forming of the mounting structure 30 simpler, easy to process and implement, reduces the processing difficulty of the staff, and improves the working efficiency of the staff.

As shown in Fig. 1, the housing assembly further includes a connection adhesive 50, where the connection adhesive 50 is disposed on the cooling structure 10, so that the cooling structure 10 is connected to the mounting structure 30 and the cell 1 by using the connection adhesive 50. At least a part of the connection adhesive 50 is made of a thermally conductive material. In this way, by means of the arrangement method of the connection adhesive 50, on the one hand, the connection between the cooling structure 10, the mounting structure 30 and the cell 1 is achieved, thereby simplifying the assembly steps of the staff, and improving the working efficiency of the staff; on the other hand, heat of the cell 1 may be transferred to the cooling structure 10, thereby ensuring reliability of heat dissipation of the cell 1. At the same time, the described arrangement avoids the phenomenon that a cooling structure 10 and an cell 1 are separated due to an external force or deformation of a housing assembly itself, thereby achieving the stability of the connection between the cell 1 and the cooling structure 10 and the reliability of heat dissipation, reducing the probability of a battery module breaking, improving the structural strength of the battery module, and ensuring the operation reliability and the reliability of heat dissipation of the battery module.

In an embodiment, the connection adhesive 50 is a thermally conductive structural adhesive.

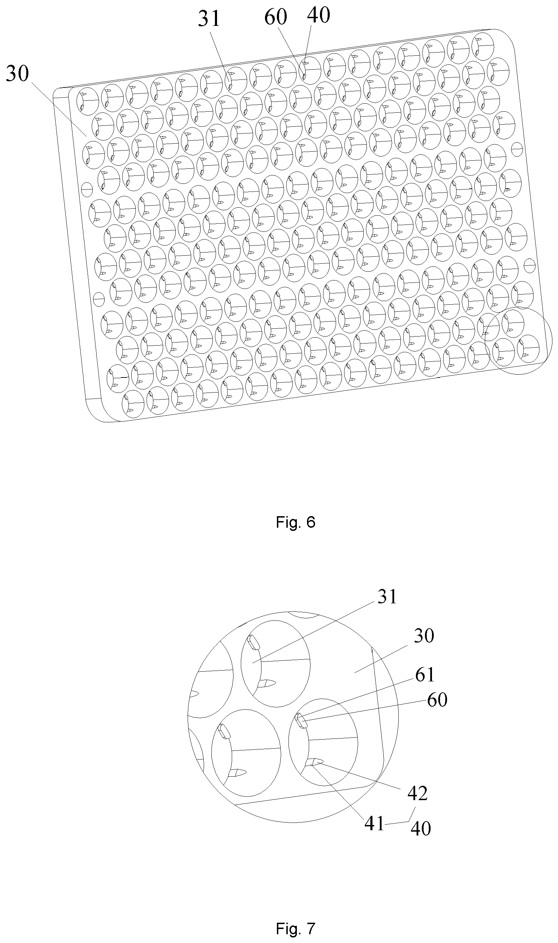

As shown in Fig. 7, the housing assembly further includes a limiting structure 60, where the limiting structure 60 is disposed on a wall of the mounting hole, and one end, closing to the cooling structure 10, of the cell 1 is in contact with the limiting structure 60 to limit the cell 1. In this way, the arrangement manner of the limiting structure 60 ensures the precise position of the cell 1 in the mounting hole 31, and may also ensure the uniformity of the heights of the plurality of cells 1, thereby achieving the consistency of heat conduction between the plurality of cells 1 and the cooling structure 10.

In this embodiment, the limiting structure 60 may also ensure the height of the connection adhesive 50, thereby preventing the cell 1 from transitionally pressing the connection adhesive 50 due to the non-uniform height of the battery, reducing the thermal conductivity and viscosity of the connection adhesive 50, thereby ensuring the thermal conduction reliability and connection reliability of the connection adhesive 50, and further ensuring the heat dissipation reliability and operation reliability of the battery module.

As shown in Fig. 1, the housing assembly further includes a sealing adhesive 70, where the sealing adhesive 70 is disposed in the accommodating space 21 to fill a gap between the cell 1 and the enclosing structure 20. In this way, on the one hand, the arrangement manner of the sealing adhesive 70 may be cured and hardened after the gap is filled, so that the stability of the connection between the cell 1 and the enclosing structure 20 is enhanced, the structural strength of the housing assembly is enhanced, and the structural strength of the battery module is improved; on the other hand, irregular gaps between cells 1 may be compensated, the phenomenon of short circuit due to squeezing between multiple cells 1 is avoided, the spatial arrangement of multiple cells 1 is optimized, the operation safety and reliability of a battery module are improved, and the high energy density of the battery module is also ensured.

In an embodiment, the sealing adhesive 70 is a foam resin.

As shown in Fig. 7, the elastic structure 40 includes a main body part 41 and a guide part 42. The main body part 41 is disposed on the wall of the mounting hole. The guide part 42 is provided on the end, away from the cooling structure 10, of the main body part 41, and along the direction from the main body part 41 to the guide part 42, the diameter of at least part of the guide part 42 is gradually reduced, so that at least part of the outer surface of the guide part 42 forms a conical structure. In this way, the foregoing arrangement enables a worker to provide guidance for the cell 1 in a process of installing or detaching the cell 1, thereby ensuring smooth assembly and disassembly of the cell 1, reducing a worker's working difficulty, and improving a staff's working efficiency.

In this embodiment, both the main body part 41 and the guide part 42 are connected to the wall of the mounting hole 31.

In an embodiment, there are a plurality of elastic structures 40, and the plurality of elastic structures 40 are disposed at intervals along the extending direction of the wall of the mounting hole, so that the outer surface of the cell 1 is kept in contact with the wall of the mounting hole by using the plurality of elastic structures 40; or there are a plurality of elastic structures 40, the plurality of elastic structures 40 are disposed at intervals around the axis of the mounting hole 31, and a clamping space is formed between the plurality of elastic structures 40, so as to clamp the cell 1. In this way, the plurality of elastic structures 40 may adapt to cells 1 of different specifications and sizes, thereby improving the mounting versatility of the mounting structure 30, and also improving the universality of the housing assembly. Meanwhile, when a plurality of elastic structures 40 are disposed around a wall of the mounting hole 31, the plurality of elastic structures 40 may clamp the cell 1, thereby ensuring installation stability of the cell 1 and also protecting the cell 1, preventing the cell 1 from being damaged due to external vibration, achieving anti-vibration performance of the cell 1, and improving operation reliability and safety of a battery module.

In this embodiment, the number of the elastic structures 40 is three, and the three elastic structures 40 are spaced apart from each other around the axis of the mounting hole 31.

It should be noted that, the number of the elastic structures 40 to be arranged is not limited thereto, and may be adjusted according to working conditions and usage requirements. In one embodiment, the number of the elastic structures 40 to be arranged is two, four, five, seven, or more.

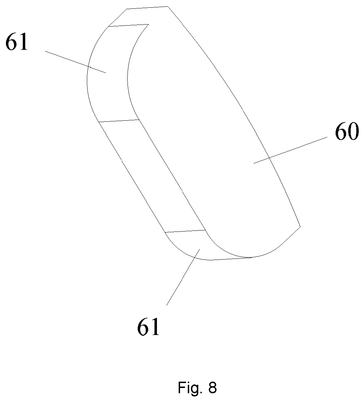

As shown in Fig. 8, the limiting structure 60 is plate-shaped, and at least a part of edges, away from the wall of the mounting hole, of the limiting structure 60 are provided with a chamfer 61. In this way, the foregoing arrangement makes edges of the limiting structure 60 more smooth, reduces a risk of damage to an outer surface of the cell 1, and ensures operation reliability and safety of the cell 1.

In an embodiment, there are a plurality of limiting structures 60, and the plurality of limiting structures 60 are spaced apart from each other around the axis of the mounting hole 31. In this way, the plurality of limiting structures 60 may balance the gravity of the cell 1, improve the precise position of the cell 1 in the mounting hole 31, ensure the height consistency among the plurality of cells 1, and improve the heat conduction consistency between the plurality of cells 1 and the cooling structure 10.

In this embodiment, the number of the limiting structures 60 is three.

It should be noted that the number of the limiting structures 60 is not limited thereto, and may be adjusted according to working conditions and usage requirements. In one embodiment, the number of the limiting structures 60 is two, four, five, seven, or more.

As shown in Figs. 2 and 3, the cooling structure 10 and the enclosing structure 20 are integrally formed. In this way, the described arrangement improves the structural strength of the housing assembly, improves the impact resistance and rigidity of the housing assembly, and improves the structural integrity and strength of the battery module. At the same time, the described arrangement also simplifies the assembly steps of the staff, reduces the working difficulty of the staff, and improves the working efficiency of the staff.

In this embodiment, the liquid cooling plate includes a flow channel plate and a flow plane plate, the flow plane plate is connected to the enclosing structure 20, and the flow plane plate and the enclosing structure 20 are integrally formed by die-casting. Wherein the flow plane plate is brazed to the flow channel plate, and the flow channel plate is formed by punching sheet metal.

In the present embodiment, the enclosing structure 20 and the cooling structure 10 are integrally formed and arranged, avoiding the overflow of the connection adhesive 50 and the sealing adhesive 70 when they are not solidified, resulting in the waste of production materials, reducing production costs, and improving the economy of the battery module.

In an embodiment, a staff first installs the plurality of cells 1 into the mounting holes 31, and then the staff coats the thermally conductive structural adhesive onto the cooling structure 10. The staff places the mounting structure 30 on which the cells 1 are installed on the thermally conductive structural adhesive, and after the thermally conductive structure adhesive is gelled and fixed, adheres the mounting structure 30 and the plurality of cells 1 to the cooling structure 10. Then, a staff fills a foaming adhesive into the accommodating space 21, the foaming adhesive fills gaps between the plurality of cells 1 and gaps between the cells 1 and the enclosing structure 20, and after foaming and gelling, the plurality of cells 1 and the enclosing structure 20 are allowed to solidify into one piece, thereby enhancing the structural strength of the battery module.

The present invention also provides a battery module (not shown). The battery module includes a housing assembly. The housing assembly includes a cooling structure 10, an enclosing structure 20, an installing structure 30 and an elastic structure 40. The enclosing structure 20 is arranged on the cooling structure 10, the enclosing structure 20 and at least a part of the cooling structure 10 form an accommodating space 21, and the accommodating space 21 is configured for accommodating the cell 1. The mounting structure 30 is disposed in the accommodating space 21, and the mounting structure 30 has a mounting hole 31, so that the cell 1 is connected to the cooling structure 10 through the mounting hole 31. The elastic structure 40 is disposed on the wall of the mounting hole 31, so that the outer surface of the cell 1 is kept in contact with the wall of the mounting hole by using the elastic structure 40.

The present invention also provides a battery system (not shown). The battery system includes a battery module. The battery module includes a housing assembly. The housing assembly includes a cooling structure 10, an enclosing structure 20, a mounting structure 30 and an elastic structure 40. The enclosing structure 20 is arranged on the cooling structure 10, the enclosing structure 20 and at least a part of the cooling structure 10 form an accommodating space 21, and the accommodating space 21 is configured for accommodating the cell 1. The mounting structure 30 is disposed in the accommodating space 21, and the mounting structure 30 has a mounting hole 31, so that the cell 1 is connected to the cooling structure 10 through the mounting hole 31. The elastic structure 40 is disposed on the wall of the mounting hole 31, so that the outer surface of the cell 1 is kept in contact with the wall of the mounting hole by using the elastic structure 40.

From the above description, it can be seen that the above embodiments of the present invention achieve the following technical effects:
An enclosing structure of the housing assembly is provided on the cooling structure, the enclosing structure encloses at least a part of the cooling structure to form an accommodating space, and the accommodating space is configured for accommodating the cell. The mounting structure is provided in the accommodating space, and the mounting structure has a mounting hole so that the cell is connected to the cooling structure via the mounting hole. The elastic structure is disposed on the wall of the mounting hole, so that the outer surface of the cell is kept in contact with the wall of the mounting hole through the elastic structure. In this way, on the one hand, the arrangement manner of the cooling structure may be combined with the enclosing structure, so that the containment reliability of the housing assembly is achieved, the structural strength of the housing assembly is ensured, the production cost is also reduced, and the economy of the battery module is achieved; on the other hand, the battery module may directly contact the cell, thereby reducing the temperature of the cell, and ensuring the reliability of heat dissipation and the reliability of operation of the cell; therefore, while implementing structural strength of the battery module itself, the reliability of heat dissipation is also achieved, and the operation safety of the battery module is prevented from being low. In addition, the arrangement of the elastic structure enables the cell to be stably mounted on the mounting structure, thereby preventing the cell from shaking and rotating due to the vibration of an external force, and ensuring the stability and operational reliability of the cell.

## Claims

1. A housing assembly, comprising:
a cooling structure (10);
an enclosing structure (20), wherein the enclosing structure (20) is arranged on the cooling structure (10), the enclosing structure (20) and at least a part of the cooling structure (10) enclose to form an accommodating space (21), and the accommodating space (21) is configured to accommodate a cell (1);
a mounting structure (30), wherein the mounting structure (30) is disposed in the accommodating space (21), the mounting structure (30) has a mounting hole (31), the cell (1) is connected to the cooling structure (10) through the mounting hole (31);
an elastic structure (40), wherein the elastic structure (40) is disposed on a wall of the mounting hole (31), an outer surface of the cell (1) is kept in contact with the wall of the mounting hole (31) through the elastic structure (40).

2. The housing assembly as claimed in claim 1, wherein the mounting structure (30) is of a rectangular plate shape, and there are a plurality of mounting holes (31), the plurality of mounting holes (31) are divided into a plurality of groups, each of the plurality of groups of the plurality of mounting holes (31) comprises multiple mounting holes (31), and the plurality of groups of the plurality of mounting holes (31) are distributed at intervals along a length direction of the mounting structure (30), multiple mounting holes (31) in each of the plurality of groups of the plurality of mounting holes (31) are distributed at intervals along a width direction of the mounting structure (30).

3. The housing assembly as claimed in claim 2, wherein the housing assembly further comprises a connection adhesive (50), and the connection adhesive (50) is provided on the cooling structure (10), the cooling structure (10) is connected to the mounting structure (30) and the cell (1) through the connection adhesive (50);
at least a portion of the connection adhesive (50) is made of a thermally conductive material.

4. The housing assembly as claimed in claim 3, wherein the housing assembly further comprises a limiting structure (60), the limiting structure (60) is disposed on the wall of the mounting hole, and one end, closing to the cooling structure (10), of the cell (1) is in contact with the limiting structure (60) to limit the cell (1).

5. The housing assembly as claimed in claim 2, wherein the housing assembly further comprises a sealing adhesive (70), and the sealing adhesive (70) is provided in the accommodating space (21) to fill a gap between the cell (1) and the enclosing structure (20).

6. The housing assembly as claimed in claim 1, wherein the elastic structure (40) comprises:
a main body part (41) arranged on the wall of the mounting hole;
and a guiding part (42) arranged on one end, away from the cooling structure (10), of the main body part (41), wherein in a direction from the main body part (41) to the guiding part (42), at least part of the guiding part (42) has a diameter gradually reduced, at least part of an outer surface of the guiding part (42) forms a conical structure.

7. The housing assembly as claimed in claim 6, wherein,
a plurality of elastic structures (40) are provided, and the plurality of elastic structures (40) are arranged at intervals along an extending direction of the wall of the mounting hole, the outer surface of the cell (1) is kept in contact with the wall of the mounting hole through the plurality of elastic structures (40), or,
a plurality of elastic structures (40) are provided, the plurality of elastic structures (40) are arranged at intervals around an axis of the mounting holes (31), and a clamping space is formed between the plurality of elastic structures (40) to clamp the cell (1).

8. The housing assembly as claimed in claim 4, wherein the limiting structure (60) is plate-shaped, and at least a part of an edge, away from the wall of the mounting hole (31), of the limiting structure (60) is provided with a chamfer (61).

9. The housing assembly as claimed in claim 8, wherein a plurality of limiting structures (60) are provided, and the plurality of limiting structures (60) are arranged at intervals around an axis of the mounting hole (31).

10. The housing assembly as claimed in claim 1, wherein the cooling structure (10) and the enclosing structure (20) are integrally formed.

11. A battery module, comprising the housing assembly as claimed in any one of claims 1 to 9.

12. A battery system, comprising the battery module as claimed in claim 11.
